# FASCICULE DE BREVET EUROPEEN

(11) **EP 1 950 110 B1**
(45) Date de publication et mention de la délivrance du brevet: **15.07.2009**
(21) Numéro de dépôt: 08305008.8
(22) Date de dépôt: 22.01.2008
(51) Int. Cl.: B60S 1/52

(54) **Dispositif à gicleur pour lave glace de véhicule automobile, à buse de projection oscillante**
Vorrichtung mit Spritzdüse für Scheibenwischanlage eines Kraftfahrzeugs mit Düse mit oszillierender Sprühfunktion
Spraying device for an automobile windscreen washer with a tilting spraying nozzle

(30) Priorité: 24.01.2007 FR 0752860
(43) Date de publication de la demande: 30.07.2008
(73) Titulaire: PEUGEOT CITROËN AUTOMOBILES S.A., 78140 Vélizy Villacoublay (FR)
(72) Inventeur: Jeuffe, Gérard, 78580, BAZEMONT (FR); Chiron, Yohann, 49110, CHAUDRON-EN-MAUGES (FR)

(56) Documents cités:
- DE-A1-3102004 050 67
- US-A1- 2003 234 303

## Description

La présente invention est relative à un dispositif à gicleur pour lave glace de véhicule automobile, comportant une buse de projection d'un liquide de lavage sur une surface vitrée, notamment quoique non exclusivement celle du pare brise avant ou de la lunette arrière de ce véhicule, cette buse étant animée d'un mouvement d'oscillation qui permet de faire varier la direction du jet de liquide qui en est issu et d'améliorer les conditions de son impact sur la surface vitrée, en vue d'accroître l'efficacité du lavage réalisé. Le document US 2003/234303 A décrit un dispositif selon le préambule de la revendication 1.

Il est classique de prévoir, en regard d'une surface vitrée du véhicule soumise à un balayage par la raclette souple d'un bras d'essuie glace animé d'un mouvement d'oscillation alterné autour d'un axe de rotation ou de déplacement linéaire transversal par rapport à cette surface, au moins un gicleur qui, à la demande, permet de projeter sur la vitre un jet d'un liquide de lavage, notamment à propriété détergente, pour faciliter le décollement et l'élimination des salissures déposées et qui adhèrent parfois fortement sur cette surface.

Toutefois, il s'avère que dans les solutions usuelles, la buse du gicleur a une orientation fixe, délivrant un jet de liquide sous pression, projeté en nappe sur la vitre avec une orientation toujours égale à elle-même à la sortie de cette buse, ce qui ne permet pas de mouiller la vitre de façon optimale, surtout si le véhicule se déplace à vitesse notable en créant un flux d'air aérodynamique qui s'écoule en suivant le profil de l'habitacle et qui a tendance à dévier le jet issu de la buse et notamment à le rabattre, en limitant encore plus sa capacité à humidifier efficacement une zone étendue de la surface vitrée.

Une autre solution peut consister, pour pallier cet inconvénient, à embarquer le gicleur sur le bras de l'essuie glace, ce qui exige de relier ce gicleur à une tuyauterie flexible mobile avec le bras, cette solution étant complexe à mettre en oeuvre, exigeant des opérations de montage et de maintenance délicates et ne présentant pas une fiabilité suffisante dans le temps, en raison de l'usure inéluctable de la tuyauterie, soit du fait de son fonctionnement en déplacement avec le bras, soit par suite de son environnement extérieur soumis aux variations climatiques.

La présente invention est relative à un dispositif qui permet de remédier à ces inconvénients, en assurant, grâce à une oscillation automatiquement commandée du gicleur, une variation de l'orientation du jet de liquide, de sorte que celui-ci peut être projeté sur la surface vitrée de façon plus directive et surtout selon une zone plus largement étendue qu'avec les solutions classiques.

A cet effet, le dispositif à gicleur considéré, pour la fourniture d'un jet d'un liquide de lavage sous pression projeté sur une surface vitrée d'un véhicule automobile, ce liquide étant acheminé par une tubulure d'admission raccordée à un réservoir de ce liquide et à travers laquelle il est délivré à une buse de projection portée par le gicleur, le renvoyant sous forme d'une nappe ouverte à la sortie d'un orifice d'évacuation en direction de la surface vitrée, se caractérise en ce qu'il comporte un boîtier fixe comprenant une cavité interne munie d'une tuyauterie pour l'admission du liquide dans cette cavité, un organe de distribution, apte à tourner librement en rotation continue à l'intérieur de la cavité autour d'un premier axe sous la poussée du liquide, une biellette de commande, montée à coulissement dans un tiroir transversal également prévu dans la cavité en dehors de l'organe de distribution, cette biellette étant reliée à cet organe de distribution par un premier pion excentré, porté par cet organe et apte à se déplacer dans une lumière oblongue de la biellette s'étendant perpendiculairement à la direction de coulissement de celle-ci, de telle sorte que la rotation de l'organe de distribution se transforme en un déplacement alternatif de la biellette dans le tiroir, le gicleur étant constitué d'un corps portant la buse de projection, monté mobile en rotation par rapport au boîtier fixe autour d'un deuxième axe, parallèle au premier, ce corps comportant un second pion excentré, en prise avec une fourchette allongée, ménagée dans la biellette de commande pour transformer le mouvement de déplacement alternatif de celle-ci en un mouvement d'oscillation alterné du corps autour du deuxième axe.

L'invention consiste ainsi à créer sur le corps du gicleur portant la buse de projection, un mouvement résultant d'une part de l'entraînement en rotation de l'organe de distribution autour du premier axe, puis, par l'intermédiaire du premier pion, de coulissement en translation alternée de la biellette de commande dans son tiroir transversal, ce second mouvement provoquant à son tour une oscillation contrôlée de la buse de projection et la délivrance à travers son orifice d'évacuation du jet de liquide en forme de nappe sur une zone élargie de la surface vitrée, de manière à mieux couvrir cette surface au contact de laquelle se déplace le balai de l'essuie glace.

Selon une autre caractéristique, le rayon d'excentration du premier pion dans la lumière de la biellette de commande est différent du rayon d'excentration du second pion dans la fourchette de cette biellette de sorte que la rotation continue de l'organe de distribution se transforme en mouvement d'oscillation alterné d'amplitude contrôlée pour la buse de projection portée par le corps du gicleur.

Dans un mode de réalisation préféré, l'organe de distribution est constitué par une roue à aubes, celles-ci étant régulièrement réparties et espacées sur la périphérie de cette roue.

Selon une caractéristique particulière de ce mode de réalisation, chaque aube comporte une portée plane d'impact du liquide de lavage, délivré par la tuyauterie d'admission dans la cavité interne du boîtier fixe.

Avantageusement, le boîtier fixe présente un profil extérieur quelconque, dont la section est adaptée à la place disponible pour son montage en regard de la surface vitrée, la cavité interne étant délimitée par un espace dont la hauteur est déterminée pour permettre la superposition de l'organe de distribution et de la biellette de commande montée à coulissement dans le tiroir transversal.

Selon une autre caractéristique, le corps du gicleur présente un profil externe de forme cylindrique, traversé intérieurement par un conduit de liaison reliant la cavité interne du boîtier fixe à l'orifice d'évacuation de la buse de projection et comportant extérieurement un épaulement de butée pour un joint d'étanchéité appliqué par le corps contre le fond de la cavité.

De préférence, le dispositif est monté à la base du pare brise du véhicule au droit du capot de son compartiment moteur ou sur le côté latéral du pare brise, voire être intégré à la grille d'entrée d'air généralement prévue sous le pare brise, au droit du capot. Toutefois, le gicleur peut aussi être disposé à la partie supérieure ou sur le côté de la lunette arrière.

Selon une autre caractéristique, le premier axe de rotation de l'organe de distribution peut être réuni à au moins un étage réducteur de vitesse, disposé entre le premier pion excentré et cet organe et/ou entre le corps du gicleur et le deuxième pion excentré, cet étage réducteur permettant d'accroître ou de diminuer la vitesse angulaire d'oscillation du corps portant la buse de projection par rapport au boîtier fixe.

Selon deux variantes équivalentes, soit le conduit de liaison de la buse de projection est en communication avec la cavité interne, soit la tuyauterie d'admission du liquide de lavage dans la cavité est séparée d'un autre conduit amenant directement ce liquide à la buse de projection.

D'autres caractéristiques d'un dispositif à gicleur d'essuie glace et à buse oscillante conforme à l'invention, apparaîtront encore à travers l'évocation qui suit de plusieurs exemples de réalisation, donnés à titre indicatif et non limitatif, en référence aux dessins annexés sur lesquels:
- La Figure 1 est une vue schématique en perspective du capot et du pare brise d'un véhicule automobile équipé d'un dispositif à gicleur conforme à l'invention.
- La Figure 2 est une vue en perspective, à plus grande échelle, partiellement arrachée, d'un mode de réalisation particulier du dispositif considéré.
- La Figure 3 illustre le détail du mécanisme monté dans le dispositif selon la Figure 2, pour produire l'oscillation de la buse de projection portée par le corps du gicleur.
- La Figure 4 est une vue en perspective et en coupe transversale du dispositif.
- Les Figures 5, 6 et 7 sont des schémas analogues à celui de la Figure 3, permettant de mieux expliciter le fonctionnement du dispositif.

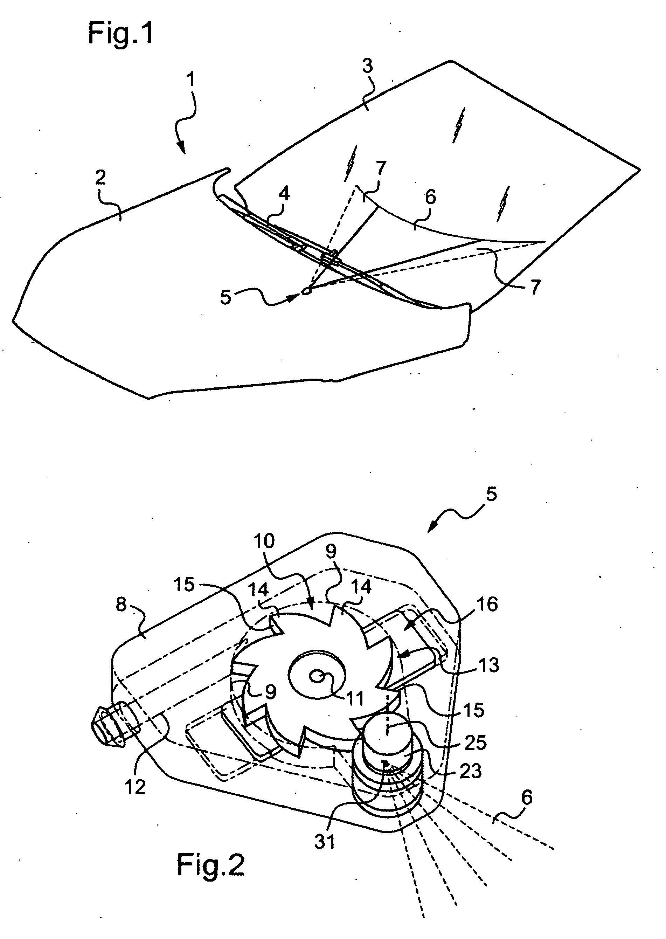

Sur la Figure 1, la référence 1 désigne la partie avant de l'habitacle d'un véhicule automobile et notamment le capot 2 qui ferme le compartiment moteur de ce dernier en regard du pare brise 3, contre la surface vitrée duquel peuvent se déplacer les balais d'un ensemble essuie glace 4, dont le détail de la réalisation n'importe pas à l'invention et qu'il n'est donc pas nécessaire de décrire ici de façon détaillée.

Il suffit en effet de préciser que, de manière classique, cet ensemble 4 peut comporter deux balais, munis chacun d'une raclette souple, en caoutchouc ou autre, appliquée contre la surface extérieure du pare brise 3, ces balais étant animés de mouvements d'oscillation alternés et agencés de manière à couvrir des zones complémentaires aussi étendues que possible de cette surface.

En variante, l'ensemble essuie glace 4 peut ne comporter qu'un seul balai muni d'une raclette de plus grande dimension, également en caoutchouc mais convenablement rigidifiée par une vertèbre de raidissement qui permet de l'appliquer sur toute sa longueur contre la surface du pare brise 3.

Comme il est usuel, l'ensemble essuie glace 4 est très généralement associé à au moins un dispositif à gicleur 5, qui peut être monté en tout endroit approprié, dans le capot 2 comme illustré sur la Figure 1, ou à la partie inférieure du pare brise 3 ou encore sur les côtés de ce dernier.

Ce dispositif à gicleur 5 est agencé de manière à permettre, sur commande du conducteur du véhicule, de projeter sous pression convenable, sur la surface du pare brise 3, un jet 6 d'un liquide de lavage approprié, notamment à propriétés détergentes, destiné à faciliter le décollement des salissures déposées et fixées sur cette surface et à permettre leur élimination sous l'effet du déplacement des balais de l'ensemble essuie glace 4.

En règle générale, le dispositif 5 est disposé en un endroit précis à proximité du pare brise 3, le gicleur qu'il comporte permettant dans ces conditions de délivrer le jet 6 avec une orientation donnée, habituellement sous la forme d'une nappe dont l'angle d'ouverture est déterminé par construction pour que ce jet soit aussi uniformément que possible réparti dans sa zone d'impact avec la surface vitrée.

On constate toutefois que cet angle d'ouverture est nécessairement limité si on veut que l'efficacité du lavage réalisé reste convenable et surtout que la zone d'impact qui en résulte est réduite et ne lui permet pas de s'étendre largement en direction des côtés du pare brise.

Le dispositif pour lave glace conforme à l'invention est conçu de telle sorte que le gicleur 5 qui délivre le jet de liquide 6 en direction du pare brise 3, soit animé d'un mouvement d'oscillation de part et d'autre d'une position médiane intermédiaire, afin d'accroître l'étendue de la surface vitrée atteinte, comme schématisé sur la Figure 1 sur des secteurs latéraux complémentaires 7, illustrés de part et d'autre du jet, et par suite d'améliorer les conditions dans lesquelles s'effectue le nettoyage de cette surface à l'aide de l'ensemble essuie glace 4, même dans le cas où le profil du pare brise est complexe et présente des parties bombées localement accentuées, ce mouvement d'oscillation permettant en outre de pallier de façon conséquente l'effet de la vitesse du véhicule qui a tendance à rabattre le jet vers le bas, en réduisant également la zone du pare brise sur laquelle il se projette.

Les Figures 2 à 4 illustrent un mode de réalisation particulier du dispositif à gicleur 5 considéré.

Ce dispositif comporte un boîtier fixe 8 dont les dimensions extérieures sont adaptées à la place disponible pour son montage à l'endroit choisi, dans lequel est ménagée une cavité interne 9, à l'intérieur de laquelle est monté un organe de distribution 10.

L'ensemble lave glace (non représenté), associé au dispositif à gicleur 5, comporte, comme bien connu dans la technique et selon une réalisation particulière dont le détail est ici sans incidence, un réservoir pour le liquide de lavage à projeter sous pression sur la surface du pare brise par l'intermédiaire d'une pompe et d'une canalisation souple raccordée au boîtier 1 afin de délivrer ce liquide à l'intérieur de la cavité 9.

L'organe de distribution 10, logé dans la cavité interne 9, est susceptible d'être entraîné en rotation autour d'un premier axe 11 sous l'effet de la pression du liquide du lavage admis dans cette cavité par une tuyauterie 12.

Dans l'exemple plus spécialement considéré, l'organe 10 est constitué par une roue 13 à aubes 14, celles-ci étant régulièrement réparties et espacées sur la périphérie de cette roue.

Ainsi et dans l'exemple considéré, la roue représentée comporte huit aubes 14 successives dont chacune comprend une portée plane 15 sur laquelle le liquide de lavage sous pression, admis par la tuyauterie 12, crée un impact permettant, d'une aube à la suivante, d'entraîner la roue en rotation continue autour de l'axe 11.

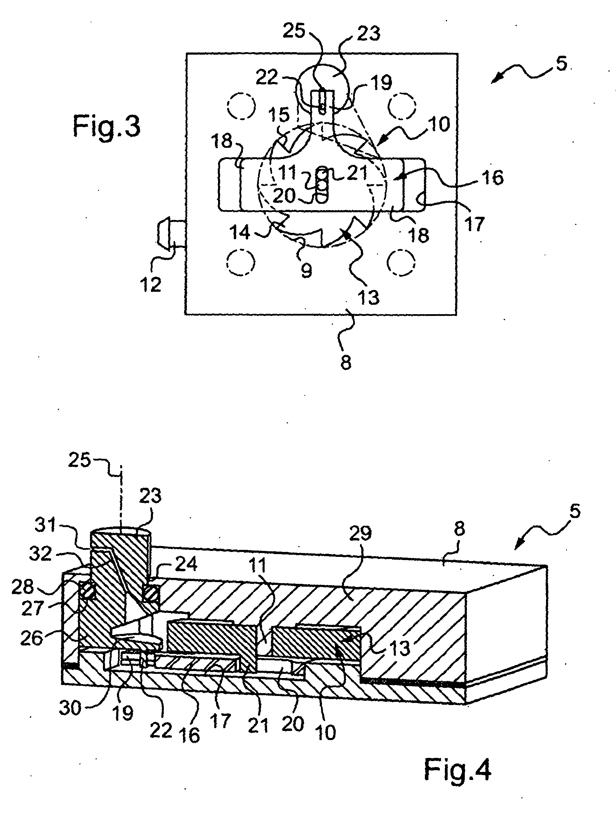

Selon l'invention, l'organe de distribution 10 est associé à une biellette de commande 16, montée à coulissement à l'intérieur d'un tiroir transversal 17, également ménagé dans la cavité interne 9 mais disposé au-dessous de la roue 13 à aubes 14 comme représenté sur la coupe de la Figure 4.

Cette biellette de commande 16 comporte deux ailes latérales 18 montées à coulissement dans le tiroir 17 et une extension médiane 19 en forme de fourchette ouverte.

La biellette 16 comporte par ailleurs, sensiblement dans sa partie centrale, entre ses ailes latérales 18, une lumière oblongue 20 dans laquelle est susceptible de se déplacer librement un premier pion 21, porté par la roue 13, cette lumière étant orientée sensiblement perpendiculairement à la direction longitudinale du tiroir 17 recevant la biellette 16, de telle sorte que la rotation de la roue par suite de la pression du liquide de lavage s'exerçant sur la portée plane 15 de chacune des aubes 14, se transforme en un mouvement de translation alterné de la biellette dans le tiroir, par suite du déplacement du pion 21 tournant avec la roue 13, dans la lumière 20.

A l'intérieur de la fourchette 19, en partie médiane de la biellette de commande 16, est monté un second pion 22, lequel est solidaire du corps 23 du gicleur 5, mais est convenablement excentré par rapport à celui-ci.

Ce corps 23 présente avantageusement une forme cylindrique et est monté dans un alésage circulaire 24 du boîtier fixe 8, qui débouche à l'intérieur de la cavité 9. L'axe 25 du corps 23 constitue un second axe, parallèle mais décalé latéralement dans cette cavité par rapport au premier axe 11 de l'organe de distribution rotatif 10.

Par ailleurs, et selon une caractéristique particulière de l'invention, la distance qui mesure l'excentration du second pion 22 par rapport à ce second axe 25 est déterminée par construction de manière à être différente de celle qui mesure l'excentration du premier pion 21 par rapport au premier axe 11.

Le corps 23 comporte un élargissement 26 de sa section, délimitant une portée d'appui 27 pour un joint d'étanchéité 28, appliqué contre le fond en regard 29 du boîtier 8 fermant la cavité interne 9 et, à l'opposé, une patte 30 supportant le second pion 22 engagé dans la fourchette 19 de la biellette 16.

Le corps 23 du gicleur 5 comporte enfin une buse de sortie 31, montée à l'extrémité d'un conduit 32 reliant cette buse à l'intérieur de la cavité 9, cette buse comportant un orifice d'évacuation calibré afin de permettre au liquide de lavage admis sous pression dans cette cavité d'être projeté vers l'extérieur du corps en direction du pare brise 3, comme illustré sur la Figure 1.

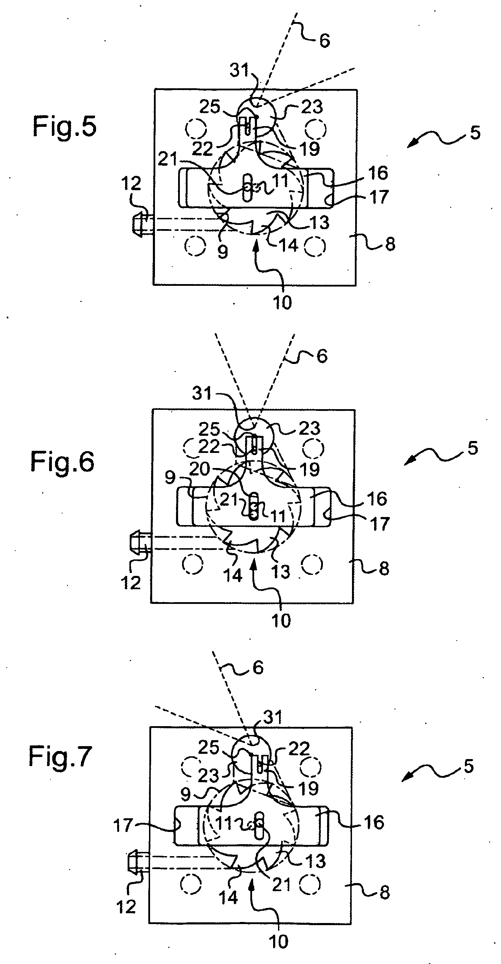

Les Figures 5 à 7 permettent de comprendre la mise en oeuvre du gicleur 5 ainsi réalisé conformément à l'invention.

Sous l'effet de la pression du liquide de lavage admis dans la cavité interne 9 par la tuyauterie 12, la roue 13 de l'organe de distribution 10 est entraînée en rotation continue autour du premier axe 11, son mouvement provoquant, par coulissement du premier pion 21 dans la lumière oblongue 20 perpendiculaire au sens de déplacement de la biellette 16 dans son tiroir transversal 17, le déplacement en translation, successivement vers la droite puis vers la gauche et inversement, de cette biellette.

Simultanément, le coulissement relatif du second pion 22 porté par le corps 23 du gicleur 5 dans la fourchette ouverte 19, imprime à celui-ci un mouvement d'oscillation alterné dans son alésage cylindrique 24 autour du second axe 25, la différence des distances d'excentration des pions 21 et 22 permettant à ce dernier de rester toujours prisonnier dans la fourchette 19 et par suite de contrôler et de limiter le débattement du corps 23 successivement vers la droite ou vers la gauche, avec un angle d'ouverture du jet approprié.

La buse 30 qui, dans l'exemple de réalisation décrit, est en liaison avec l'intérieur de la cavité 9, et par suite est alimentée en permanence par le liquide de lavage sous pression admis dans celle-ci par la tuyauterie 12 pour l'entraînement de l'organe de distribution 10, peut dès lors diriger le jet 6 issu de son orifice d'évacuation vers le pare brise, non seulement dans une direction centrale comme représenté sur la Figure 6, mais alternativement vers la droite (Figure 5) puis vers la gauche (Figure 7) selon un mouvement continu d'oscillation.

Il en résulte une efficacité accrue du gicleur 5 grâce à la répartition du liquide de lavage sur une surface plus étendue, le jet produit étant par ailleurs, du fait de son mouvement propre d'oscillation, moins sensible aux perturbations dues au flux aérodynamique créé le long de la surface externe de son habitacle et notamment au droit du pare brise, par le véhicule en déplacement.

Bien entendu, il va de soi que l'invention ne se limite pas à l'exemple de réalisation plus spécialement décrit ci-dessus en référence au dessin annexé ; elle en embrasse au contraire toutes les variantes.

Notamment, on conçoit aisément que la mise en oeuvre du dispositif à gicleur oscillant n'est pas limitée à la projection du jet du liquide de lavage sur le pare brise avant d'un véhicule, mais qu'elle pourrait aussi bien être envisagée pour le nettoyage de la lunette arrière de ce véhicule, voire de toute autre surface vitrée de ce dernier, comme par exemple le toit panoramique transparent qu'il comporte éventuellement.

Par ailleurs, dans l'exemple décrit, on a prévu que la buse 30 du corps de gicleur 23 était alimentée avec le liquide de lavage par un conduit de liaison 31 en communication avec l'intérieur de la cavité 9 du boîtier fixe 8, ce liquide étant prélevé au-delà de l'organe de distribution rotatif 10 après avoir réalisé l'entraînement de ce dernier.

Dans une autre variante, on peut aussi envisager de dissocier l'alimentation de la buse de projection du circuit qui provoque la rotation de l'organe de distribution et par suite l'oscillation du corps du gicleur, en reliant directement la buse au réservoir de liquide en aval de la pompe de mise en pression de celui-ci.

Enfin, on peut, selon le cas, envisager d'ajouter un étage réducteur, à engrenages ou moyens de renvoi analogues, entre le premier axe de l'organe de distribution rotatif et le premier pion excentré qui entraîne la biellette de commande ou le second pion qui provoque l'oscillation du corps du gicleur portant la buse de projection autour du second axe de manière à diminuer ou accroître la vitesse angulaire avec laquelle se produit cette oscillation.

## Revendications

1. Dispositif à gicleur pour lave glace, destiné à la fourniture d'un jet d'un liquide de lavage sous pression projeté sur une surface vitrée (3) d'un véhicule automobile, ce liquide étant acheminé par une tubulure d'admission raccordée à un réservoir de ce liquide et à travers laquelle il est délivré à une buse de projection (31) portée par le gicleur (5), le renvoyant sous forme d'une nappe ouverte à la sortie d'un orifice d'évacuation en direction de la surface vitrée, le dispositif comportant un boîtier fixe (8) comprenant une cavité interne (9) munie d'une tuyauterie (12) pour l'admission du liquide dans cette cavité, **caractérisé en ce qu'il** comporte un organe de distribution (10), apte à tourner librement en rotation continue à l'intérieur de la cavité autour d'un premier axe (11) sous la poussée du liquide, une biellette de commande (16), montée à coulissement dans un tiroir transversal (17) également prévu dans la cavité (9) en dehors de l'organe de distribution (10), cette biellette étant reliée à cet organe de distribution par un premier pion excentré (21), porté par cet organe et apte à se déplacer dans une lumière oblongue (20) de la biellette s'étendant perpendiculairement à la direction de coulissement de celle-ci, de telle sorte que la rotation de l'organe de distribution (10) se transforme en un déplacement alternatif de la biellette (16) dans le tiroir (17), le gicleur (5) étant constitué d'un corps (23) portant la buse de projection (31), monté mobile en rotation par rapport au boîtier fixe (8) autour d'un deuxième axe (25), parallèle au premier, ce corps comportant un second pion excentré (22), en prise avec une fourchette allongée (19), ménagée dans la biellette de commande (16) pour transforme le mouvement de déplacement alternatif de celle-ci en un mouvement d'oscillation alterné du corps (23) autour du deuxième axe (25).

2. Dispositif à gicleur selon la revendication 1, **caractérisé en ce que** le rayon d'excentration du premier pion (21) dans la lumière (20) de la biellette de commande (16) est différent du rayon d'excentration du second pion (22) dans la fourchette (19) de cette biellette.

3. Dispositif à gicleur selon l'une des revendications 1 ou 2, **caractérisé en ce que** l'organe de distribution (10) est constitué par une roue (13) à aubes (14), celles-ci étant régulièrement réparties et espacées sur la périphérie de cette roue.

4. Dispositif à gicleur selon la revendication 3, **caractérisé en ce que** chaque aube (14) comporte une portée plane (15) d'impact du liquide de lavage, délivré par la tuyauterie d'admission (12) dans la cavité interne (9) du boîtier fixe (8).

5. Dispositif à gicleur selon l'une quelconque des revendications 1 à 4, **caractérisé en ce que** le boîtier fixe (8) présente un contour extérieur quelconque, dont la section est adaptée à la place disponible pour son montage en regard de la surface vitrée (3), la cavité interne (9) étant délimitée par un cylindre dont la hauteur est déterminée pour permettre la superposition de l'organe de distribution (10) et de la biellette de commande (16) montée à coulissement dans le tiroir transversal (17).

6. Dispositif à gicleur selon l'une quelconque des revendications 1 à 5, **caractérisé en ce que** le corps (23) du gicleur (5) présente un profil externe de forme cylindrique, traversé intérieurement par un conduit de liaison (32) reliant la cavité interne (9) du boîtier fixe (8) à l'orifice d'évacuation de la buse de projection (31) et comporte extérieurement un épaulement de butée (27) pour un joint d'étanchéité (28) appliqué par le corps contre le fond (29) de la cavité (9).

7. Dispositif à gicleur selon l'une quelconque des revendications 1 à 6, **caractérisé en ce qu'**il peut être disposé à la base du pare brise (3) du véhicule au droit du capot (2) de son compartiment moteur ou sur le côté latéral de ce pare brise, voire est intégré dans une grille d'entrée d'air prévue sous le pare brise.

8. Dispositif à gicleur selon l'une quelconque des revendications 1 à 6, **caractérisé en ce qu'**il peut être disposé à la partie supérieure ou sur le côté de la lunette arrière du véhicule.

9. Dispositif à gicleur selon l'une quelconque des revendications 1 à 8, **caractérisé en ce que** le premier axe de rotation (11) de l'organe de distribution (10) est réuni à au moins un étage réducteur de vitesse, disposé entre le premier pion excentré (21) et cet organe et/ou entre le corps (23) du gicleur (5) et le second pion excentré (22).

10. Dispositif à gicleur selon l'une quelconque des revendications 6 à 9, **caractérisé en ce que** le conduit de liaison (32) de la buse de projection (31) est en communication directe avec la cavité interne (9).

11. Dispositif à gicleur selon la revendication 1, **caractérisé en ce que** la tuyauterie d'admission (12) du liquide de lavage dans la cavité interne (9) est séparée d'un autre conduit, amenant directement ce liquide à la buse de projection (31)..

## Claims

1. Jet device for windscreen washer, intended to supply a jet of a washing liquid under pressure sprayed onto a glazed surface (3) of a motor vehicle, this liquid being conveyed by an intake tubing connected to a tank of this liquid and through which it is delivered to a spray nozzle (31) borne by the jet (5), returning it in the form of an open sheet to the outlet of a discharge orifice in the direction of the glazed surface, the device comprising a fixed casing (8) comprising an internal cavity (9) provided with a pipe (12) for the intake of the liquid into this cavity, **characterized in that** it comprises a distribution member (10), able to revolve freely in continuous rotation inside the cavity about a first axis (11) under the thrust of the liquid, a control tie rod (16), mounted to slide in a transversal slide valve (17) also provided in the cavity (9) outside the distribution member (10), this tie rod being linked to this distribution member by a first eccentric pin (21), borne by this member and able to be displaced in an oblong opening (20) of the tie rod extending perpendicularly to the sliding direction of the latter, such that rotation of the distribution member (10) is converted into a reciprocating displacement of the tie rod (16) in the slide valve (17), the jet (5) comprising a body (23) bearing the spray nozzle (31), mounted to move rotation-wise relative to the fixed casing (8) about a second axis (25), parallel to the first, this body including a second eccentric pin (22), held by an elongated fork (19), provided in the control tie rod (16) to convert the reciprocating displacement motion of the latter into an alternating oscillation motion of the body (23) about the second axis (25).

2. Jet device according to Claim 1, **characterized in that** the eccentricity radius of the first pin (21) in the opening (20) of the control tie rod (16) is different from the eccentricity radius of the second pin (22) in the fork (19) of this tie rod.

3. Jet device according to one of Claims 1 or 2, **characterized in that** the distribution member (10) comprises a wheel (13) with blades (14), the latter being evenly distributed and spaced around the periphery of this wheel.

4. Jet device according to Claim 3, **characterized in that** each blade (14) comprises a flat face (15) impacting on the washing liquid, delivered by the intake pipe (12) into the internal cavity (9) of the fixed casing (8).

5. Jet device according to any one of Claims 1 to 4, **characterized in that** this fixed casing (8) has any external outline, the cross-section of which is suited to the space of available for it to be fitted facing the glazed surface (3), the internal cavity (9) being delimited by a cylinder, the height of which is determined to enable the distribution member (10) and the control tie rod (16) mounted to slide in the transversal slide valve (17) to be superimposed.

6. Jet device according to any one of Claims 1 to 5, **characterized in that** the body (23) of the jet (5) has an external profile of cylindrical form, passed through internally by a link duct (32) linking the internal cavity (9) of the fixed casing (8) to the discharge orifice of the spray nozzle (31) and comprises externally an abutment shoulder (27) for a sealing ring (28) pressed by the body against the bottom (29) of the cavity (9).

7. Jet device according to any one of Claims 1 to 6, **characterized in that** it can be positioned at the base on the right of the lid (2) of its engine compartment or on the lateral side of this windscreen, or even is incorporated in an air intake grill provided under the windscreen.

8. Jet device according to any one of Claims 1 to 6, **characterized in that** it can be positioned in the top part or on the side of the rear window of the vehicle.

9. Jet device according to any one of Claims 1 to 8, **characterized in that** the first axis of rotation (11) is common to at least one speed reducing stage, positioned between the first eccentric pin (21) and this member and/or between the body (23) of the jet (5) and the second eccentric pin (22).

10. Jet device according to any one of Claims 6 to 9, **characterized in that** the link duct (32) of the spray nozzle (31) is in direct communication with the internal cavity (9).

11. Jet device according to Claim 1, **characterized in that** pipe (12) for the intake of washing liquid into the internal cavity (9) is separated from another duct, directly bringing this liquid to the spray nozzle (31).

## Patentansprüche

1. Vorrichtung mit Spritzdüse für Scheibenwischanlage, die dazu bestimmt ist, einen Strahl einer Waschflüssigkeit unter Druck, der auf eine verglaste Fläche (3) eines Kraftfahrzeugs geschleudert wird, zu liefern, wobei diese Flüssigkeit durch einen Einlassrohrstutzen, der an einen Behälter mit dieser Flüssigkeit angeschlossen ist, befördert wird, und durch welchen Stutzen sie zu einer Strahldüse (31), die von der Spritzdüse (5) getragen wird, geliefert wird, die ihn in Form einer offenen Schicht zu dem Ausgang einer Ableitöffnung in Richtung der verglasten Fläche zurückleitet, wobei die Vorrichtung ein stationäres Gehäuse (8) aufweist, das einen Innenhohlraum (9) aufweist, der mit einer Rohrleitung (12) für das Einlassen der Flüssigkeit in diesen Hohlraum versehen ist, **dadurch gekennzeichnet, dass** sie ein Verteilungsorgan (10), das frei in ununterbrochener Drehung im Inneren des Hohlraums um eine erste Achse (11) unter dem Schub der Flüssigkeit drehen kann, einen Steuerschwingarm (16), der gleitend in einem Querfach (17), das ebenfalls in dem Hohlraum (9) außerhalb des Verteilungsorgans (10) vorgesehen ist, montiert ist, aufweist, wobei dieser Schwingarm mit diesem Verteilungsorgan durch einen ersten außermittigen Bolzen (21), der von diesem Organ getragen wird und sich in einem Langloch (20) des Schwingarms, das sich senkrecht zu der Gleitrichtung dieses erstreckt, bewegen kann, derart verbunden ist, dass sich das Drehen des Verteilungsorgans (10) in eine abwechselnde Bewegung des Schwingarms (16) in dem Fach (17) verwandelt, wobei die Spritzdüse (5) aus einem Körper (23), der die Strahldüse (31) trägt, besteht, der in Drehung in Bezug zu dem stationären Gehäuse (8) um eine zweite Achse (25), die zu der ersten parallel ist, beweglich montiert ist, wobei dieser Körper einen zweiten außermittigen Bolzen (22) aufweist, der in eine längliche Gabel (19) eingreift, die in dem Steuerschwingarm (16) eingerichtet ist, um die abwechselnde Verschiebungsbewegung dieses in eine abwechselnde Oszillationsbewegung des Körpers (23) um die zweite Achse (25) zu verwandeln.

2. Vorrichtung mit Spritzdüse nach Anspruch 1, **dadurch gekennzeichnet, dass** der Außermittigkeitsradius des ersten Bolzens (21) in dem Langloch (20) des Steuerschwingarms (16) von dem Außermittigkeitsradius des zweiten Bolzens (23) in der Gabel (19) dieses Schwingarms unterschiedlich ist.

3. Vorrichtung mit Spritzdüse nach einem der Ansprüche 1 oder 2, **dadurch gekennzeichnet, dass** das Verteilungsorgan (10) aus einem Rad (13) mit Schaufeln (14) besteht, wobei diese regelmäßig auf dem Umfang dieses Rads verteilt und beabstandet sind.

4. Vorrichtung mit Spritzdüse nach Anspruch 3, **dadurch gekennzeichnet, dass** jede Schaufel (14) einen flachen Bereich (15) zum Aufprallen der Waschflüssigkeit, die von der Einlassrohrleitung (12) in den Innenhohlraum (9) des stationären Gehäuses (8) geliefert wird, aufweist.

5. Vorrichtung mit Spritzdüse nach einem der Ansprüche 1 bis 4, **dadurch gekennzeichnet, dass** das stationären Gehäuse (8) eine beliebige äußere Kontur aufweist, deren Querschnitt an den Platz angepasst ist, der für seine Montage gegenüber der verglasten Fläche (3) verfügbar ist, wobei der Innenhohlraum (9) von einem Zylinder abgegrenzt ist, dessen Höhe festgelegt ist, um das Überlagern des Verteilungsorgans (10) und des Steuerschwingarms (16), der gleitend in dem Querfach (17) montiert ist, zu erlauben.

6. Vorrichtung mit Spritzdüse nach einem der Ansprüche 1 bis 5, **dadurch gekennzeichnet, dass** der Körper (23) der Spritzdüse (5) ein äußeres Profil mit zylindrischer Form aufweist, innen durch eine Verbindungsleitung (32) durchquert, die den Innenhohlraum (9) des stationären Gehäuses (8) mit der Ableitöffnung der Strahldüse (31) verbindet und außen einen Anschlagansatz (27) für eine Dichtung (28) aufweist, die von dem Körper gegen den Boden (29) des Hohlraums (9) angedrückt wird.

7. Vorrichtung mit Spritzdüse nach einem der Ansprüche 1 bis 6, **dadurch gekennzeichnet, dass** sie an der Basis der Windschutzscheibe (3) des Fahrzeugs im rechten Winkel zu der Haube (2) seines Motorraums oder auf der seitlichen Seite dieser Windschutzscheibe angeordnet werden kann, ja sogar in ein Lufteinlassgitter, das unter der Windschutzscheibe vorgesehen ist, eingebaut werden kann.

8. Vorrichtung mit Spritzdüse nach einem der Ansprüche 1 bis 6, **dadurch gekennzeichnet, dass** sie im oberen Teil oder auf der Seite der Heckscheibe des Fahrzeugs angeordnet werden kann.

9. Vorrichtung mit Spritzdüse nach einem der Ansprüche 1 bis 8, **dadurch gekennzeichnet, dass** die erste Drehachse (11) des Verteilungsorgans (10) mit mindestens einer Untersetzungsstufe vereint ist, die zwischen dem ersten außermittigen Bolzen (21) und diesem Organ und/oder zwischen dem Körper (23) der Spritzdüse (5) und dem zweiten außermittigen Bolzen (22) angeordnet ist.

10. Vorrichtung mit Spritzdüse nach einem der Ansprüche 6 bis 9, **dadurch gekennzeichnet, dass** die Verbindungsleitung (32) der Strahldüse (31) direkt mit dem Innenhohlraum (9) kommuniziert.

11. Vorrichtung mit Spritzdüse nach Anspruch 1, **dadurch gekennzeichnet, dass** die Rohrleitung (12) zum Einlassen der Waschflüssigkeit in den Innenhohlraum (9) von einer anderen Leitung, die diese Flüssigkeit direkt zu der Strahldüse (31) leitet, getrennt ist.
